# EUROPÄISCHE PATENTANMELDUNG

(11) **EP 2 230 116 A2**
(43) Veröffentlichungstag der Anmeldung: **22.09.2010**
(21) Anmeldenummer: 10002545.1
(22) Anmeldetag: 11.03.2010
(51) Int. Cl.: B60J 7/12, B60R 13/02, B60J 1/18

(54) **Innenverkleidung für ein Faltverdeck**

(30) Priorität: 20.03.2009 DE 102009014261
(71) Anmelder: Magna Car Top Systems GmbH, 74321 Bietigheim-Bissingen (DE)
(72) Erfinder: Rakus, Bernd, 70499 Stuttgart (DE); Herz, Konrad, 71287 Weissach (DE); Neuberger, Markus, 70771 Leinfelden (DE)

(57) **Zusammenfassung**

Diese Innenverkleidung (14) ist für ein Faltverdeck (10) eines Personenkraftwagens konzipiert, das zwischen einer Schließstellung (Schst) und einer Offenstellung bewegbar ist und einen Verdeckbezug (11) und eine Heckscheibe (16) umfasst, welcher Verdeckbezug an einem Rand (17) einer Außenseite (18) der Heckscheibe in Lage gehalten wird, wobei an einem Rand (20) einer Innenseite (19) der Heckscheibe ein Haltesystem (21) für die Innerverkleidung festgelegt ist, das eine mit der Heckscheibe verbundene Tragleiste (22) und eine Befestigungsleiste (23) aufweist, zwischen denen eine ineinandergreifende Verbindungsglieder (25,26) besitzende Fixierungsvorrichtung (24) wirksam ist.

Zur Optimierung der Innenverkleidung bzw. des Faltverdecks umfassen die Verbindungsglieder der Fixierungsvorrichtung einen U-förmigen Aufnahmeabschnitt (27) und ein darin festgelegtes Eingriffselement (28), die mittels eines Widerhakensystems (29) zusammenarbeiten.

## Beschreibung

Die Erfindung bezieht sich auf eine Innenverkleidung für ein Faltverdeck eines Personenkraftwagens, das zwischen einer Schließstellung und einer Offenstellung bewegbar ist, nach dem Oberbegriff des Patentanspruchs 1.

Es ist ein Cabriolet-Fahrzeug mit einem Verdeckbezug, einer Heckscheibe und einer Innenverkleidung bekannt, DE 100 56 895 A1, die Bestandteil eines von einer Schließstellung in eine Offenstellung und vice versa bewegbaren Faltverdecks sind. An eine Außenseite der Heckscheibe ist der Verdeckbezug und ein Umbug von letzterem herangeführt, die durch Kleben gehalten werden. Mit der Innenseite der Heckscheibe ist eine Tragleiste verbunden, an der eine Aussteifungsleiste befestigt ist, welche Aussteifungsleiste einen Rand einer Innenverkleidung in Lage hält. Zwischen Aussteifungsleiste und Tragleiste ist eine ineinandergreifende Fixierungsvorrichtung vorgesehen. Die Aussteifungsleiste weist eine regelmäßig aufeinanderfolgende Anzahl von -einzelnen- Ausnehmungen auf, die zur Aufnahme von Gegenstücken ausgebildet sind. Die Halterung erfolgt dadurch, dass sich seitlich ausgreifende und federnde Ausleger der Gegenstücke auf Randbereichen der jeweiligen Ausnehmung abstützen.

In der DE 299 20 724 U1 wird ein Klappverdeck für Kraftfahrzeuge wie Cabriolets oder dgl. behandelt. Das Klappverdeck ist mit einem Verdeckbezug versehen, in den eine Heckscheibe integriert ist. Der Verdeckbezug liegt mit einem Umbug auf einer Außenseite der Heckscheibe auf, wogegen eine von einem Verdeckbezug weggeführte Randabdeckung mit einem Randabschnitt mit einer Innenseite der Heckscheibe in Verbindung steht. Der Randabschnitt ist mit einem Endabschnitt an die Heckscheibe angeschlossen, und an dem Endabschnitt ist eine Basisplatte eines Hakenelements befestigt, das einen U-förmigen Querschnitt aufweist. Dieser Querschnitt nimmt eine Schiene auf, an der der Verdeckbezug gehalten ist.

Es ist Aufgabe der Erfindung, eine Innenverkleidung eines Faltverdecks mit einem einfachen, jedoch hochwirksamen Haltesystem an einer in einen Verdeckbezug integrierten Heckscheibe zu befestigen. Dabei sollte das Haltesystem sich durch leichte Realisier- und aufwandsarme Herstellbarkeit auszeichnen.

Die mit der Erfindung hauptsächlich erzielten Vorteile sind darin zu sehen, dass das Haltesystem sich zwischen Heckscheibe und Innenverkleidung durch vorbildliche Funktion und aufwandsarmem Einsatz an technischen Mitteln auszeichnet. Dies wird u.a. durch die musterhafte, z.B. umlaufend oder abschnittsweise entlang der Heckscheibe verlaufende Fixierungsvorrichtung des Haltesystems unterstützt, deren Eingriffselement und Aufnahmeabschnitt sicher zusammenwirken. Und die beiden zuletzt genannten lassen sich ohne weiteres an der Tragleiste bzw. Befestigungsleiste verwirklichen. Gerade das Widerhakensystem leistet hierbei einen hervorzuhebenden Beitrag. Die Ausbildung der Befestigungsleiste mit ihrem vom Schenkel des U-förmigen Aufnahmeabschnitts weggeführten Halteflansch für die Innenverkleidung gewährleistet, dass besagte Innenverkleidung in der Schließstellung des Faltverdecks gut, will heißen gemäß konstruktiver Festlegung gehalten wird und darüber hinaus auch sicher geführt wird, wenn dieses Faltverdeck von der Schließstellung in die Offenstellung und umgekehrt verstellt wird.

In der Zeichnung wird ein Ausführungsbeispiel der Erfindung gezeigt, das nachstehend näher erläutert wird.

### Es zeigen

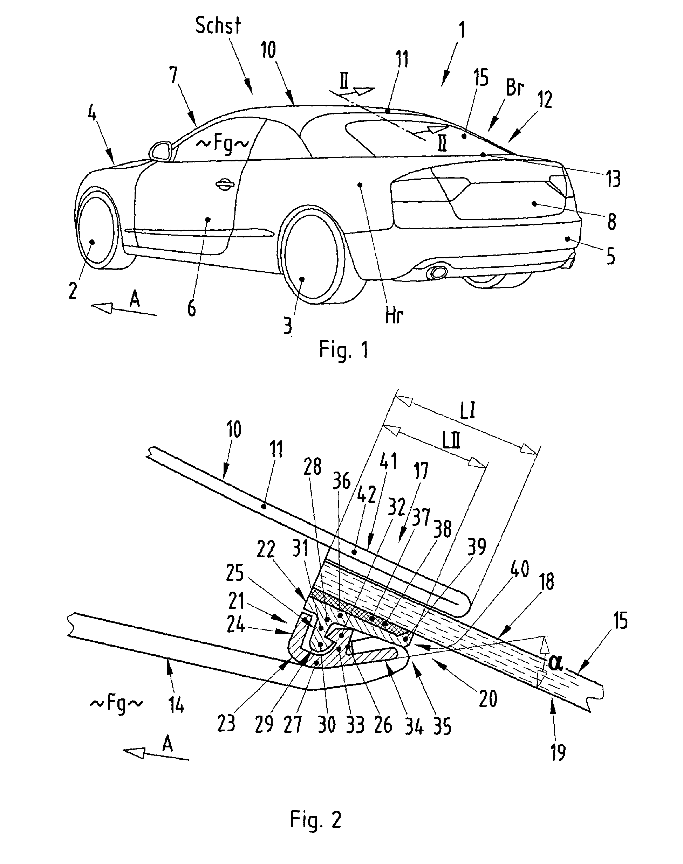

Fig. 1 eine Schrägansicht von hinten links auf einen Personenkraftwagen mit einem Faltverdeck,
Fig. 2 einen Schnitt nach der etwa entlang einer Mittellängsebene verlaufenden Linie II-II der Fig. 1 in größerem Maßstab.

Ein Personenkraftwagen 1 weist einen von Rädern 2 und 3 getragenen Aufbau 4 auf, der einen Grundkörper 5 mit Türen 6, einem Windschutzscheibenrahmen 7 und eine Heckklappe 8 besitzt. Am Aufbau 4 bzw. Grundkörper 5 ist ein Faltverdeck 10 gelagert, das zwischen einer einen Fahrgastraum Fg überspannenden Schließstellung Schst und einer in einem Heckraum Hr ablegbaren Offenstellung -nicht gezeigt- bewegbar ist. Das Faltverdeck 10 umfasst einen flexiblen Verdeckbezug 11, der sich in der Schließstellung vom Windschutzscheibenrahmen 7 bis zu einem hinteren Abschnitt 12 einer Gürtellinie 13 erstreckt. In den Verdeckbezug 11, der bereichsweise auf einer dem Fahrgastraum Fg zugewandten Seite mit einer Innenverkleidung 14 versehen ist, ist in einem rückwärtigen Bereich Br eine Heckscheibe 16 integriert. Die Heckscheibe 16 besteht bspw. aus Glas und verläuft entgegen Fahrtrichtung A betrachtet schräg von oben nach unten.

Der Verdeckbezug 11 wird an einem Rand 17 einer Außenseite 18 der Heckscheibe 16 gehalten. Auf der der Außenseite 18 gegenüberliegenden Innenseite 19 der Heckscheibe 16 ist an einem Rand 20 ein Haltesystem 21 für die Innenverkleidung 14 angeordnet, das durch eine mit der Heckscheibe 15 verbundene Tragleiste 22 und eine Befestigungsleiste 23 für die Innenverkleidung 14 gebildet wird. Zwischen Tragleiste 22 und Befestigungsleiste 23 ist eine Fixierungsvorrichtung 24 mit ineinandergreifenden und Formschluss bewirkenden Verbindungsgliedern 25 und 26 vorgesehen.

Die Verbindungsglieder 25 und 26 der Fixierungsvorrichtung 24 weisen einen im Querschnitt U-förmigen Aufnahmeabschnitt 27 und ein darin festgelegtes Eingriffselement 28 auf, die mittels eines Widerhakensystems 29 zusammenarbeiten.
Das Widerhakensystem 29 besitzt einen ersten Widerhaken 30 an einem Steg 31 des Eingriffselements 28 und einen zweiten Widerhaken 32 an einem Schenkel 33 des Querschnitts des U-förmigen Aufnahmeabschnitts 27. Der U-förmige Aufnahmeabschnitt 27 ist Bestandteil der Befestigungsleiste 23, wobei an dem Schenkel 33 des besagten Aufnahmeabschnitts 27 ein Halteflansch 34 für einen Rand 35 der Innenverkleidung 13 angeformt ist. Der Halteflansch 34 für die Innenverkleidung 13 verläuft entgegen der Fahrtrichtung A und in einem spitzen Winkel α zu der schräg nach hinten abfallenden Heckscheibe 16. Der Rand 35 der Innenverkleidung 13 ist nach Art eines Umbugs um den Halteflansch 34 herumgeführt und an besagtem Halteflansch 34 z.B. durch Kleben oder ein anderes geeignetes Fügeverfahren befestigt. Die Befestigungsleiste 23 mit Aufnahmeabschnitt 27 und Halteflansch 34 ist aus Kunststoff, Metall -Leichtmetall- oder dgl. hergestellt, und der Rand 35 der Innenverkleidung 13 ist durch Kleben, Nähen oder dgl. mit dem Halteflansch 34 verbunden.

Der Steg 31 des Eingriffselements 28 der Tragleiste 22 ist von einem Haltesteg 36 weggeführt, und Eingriffselement 28 und Haltesteg 36 stellen einen etwa T-förmigen Querschnitt dar. Dabei ist der Haltesteg 36 mittels Klebemittel 37 an der Heckscheibe 16 befestigt. Das Klebemittel 37 ist in einen Raum 38 zwischen Innenseite 19 der Heckscheibe 16 und dem Haltesteg 36 eingebracht. Um den Raum 38 zu definieren, ist am Haltesteg 36 auf der der Heckscheibe 16 zugewandten Seite eine Distanzstütze 39 vorgesehen, die an der Heckscheibe 16 anliegt. Die Distanzstütze 39 ist an einem entgegen der Fahrtrichtung A gesehen hinteren Ende 40 des Haltestegs 36 vorgesehen. Die Tragleiste 22 kann wie die Befestigungsleiste 23 aus Kunststoff, Metall -Leichtmetall- oder dgl. bestehen.

Der Verdeckbezug 11 ist mittels eines Befestigungsabschnitts 41 mit der Heckscheibe 15 verbunden, welcher Befestigungsabschnitt 41 nach Art eines Umbugs 42 ausgebildet und z.B. durch Kleben an der Heckscheibe 16 in Lage gehalten wird. Hierbei deckt der Befestigungsabschnitt 41 bzw. der Umbug 42 des Verdeckbezugs 11 das Haltesystem 21 mit Tragleiste 22 und Befestigungsleiste 23 vollständig gegenüber einer Außenseite As des Personenkraftwagens 1 ab. Schließlich ist entgegen der Fahrtrichtung A gesehen die Länge LI des Befestigungsabschnitts 40 des Verdeckbezugs 11 größer als die Länge LII des Haltestegs 36 der Tragleiste 22.

## Patentansprüche

1. Innenverkleidung für ein Faltverdeck eines Personenkraftwagens, das zwischen einer Schließstellung und einer Offenstellung bewegbar ist und einen Verdeckbezug und eine Heckscheibe umfasst, welcher Verdeckbezug an einem Rand einer Außenseite der Heckscheibe in Lage gehalten wird, wobei an einem Rand einer Innenseite der Heckscheibe ein Haltesystem für die Innerverkleidung festgelegt ist, das eine mit der Heckscheibe verbunden Tragleiste und eine Befestigungsleiste aufweist, zwischen denen eine ineinandergreifende Verbindungsglieder besitzende Fixierungsvorrichtung wirksam ist, **dadurch gekennzeichnet, dass** die Verbindungsglieder (25 und 26) der Fixierungsvorrichtung (24) einen U-förmigen Aufnahmeabschnitt (27) und ein darin festgelegtes Eingriffselement (28) umfassen, die mittels eines Widerhakensystems (29) zusammenarbeiten.

2. Innenverkleidung nach Anspruch 1, **dadurch gekennzeichnet, dass** das Widerhakensystem (29) einen ersten Widerhaken (30) an einem Steg (31) des Eingriffselements (28) und einem zweiten Widerhaken (32) an einem Schenkel (33) des im Querschnitt U-förmigen Aufnahmeabschnitts (27) besitzt.

3. Innenverkleidung nach den Ansprüchen 1 und 2, **dadurch gekennzeichnet, dass** der U-förmige Aufnahmeabschnitt (27) Bestandteil der Befestigungsleiste (23) ist und an dem Schenkel (33) des besagten Aufnahmeabschnitts (27) ein Halteflansch (34) für einen Rand (34) der Innenverkleidung (13) angeformt ist.

4. Innenverkleidung nach den Ansprüchen 1 und 3, **dadurch gekennzeichnet, dass** der Halteflansch (34) für die Innenverkleidung (13) entgegen der Fahrtrichtung (A) verläuft und relativ zu der schräg nach hinten abfallenden Heckscheibe (16) einen bspw. spitzen Winkel (α) einschließt.

5. Innenverkleidung nach den Ansprüchen 3 und 4, **dadurch gekennzeichnet, dass** der Rand (34) der Innenverkleidung (16) nach Art eines Umbugs um den Halteflansch (34) der Befestigungsleiste (23) herumgeführt und an besagtem Halteflansch (34) befestigt ist.

6. Innenverkleidung nach Anspruch 5, **dadurch gekennzeichnet, dass** die Befestigungsleiste (23) aus Kunststoff, Metall oder dgl. hergestellt ist.

7. Innenverkleidung nach den Ansprüchen 5 und 6, **dadurch gekennzeichnet, dass** der Rand (34) der Innenverkleidung (13) durch Kleben, Nähen oder dgl. mit dem Halteflansch (34) verbunden ist.

8. Innenverkleidung nach den Ansprüchen 1 und 2, **dadurch gekennzeichnet, dass** der Steg (31) des Eingriffselements (28) der Tragleiste (22) von einem Haltesteg (36) der besagten Tragleiste (22) weggeführt ist, der mittels Klebemittel (37) an der Heckscheibe (16) in Lage gehalten wird.

9. Innenverkleidung nach Anspruch 8, **dadurch gekennzeichnet, dass** das Klebemittel (37) in einen Raum (38) zwischen Innenseite (19) der Heckscheibe (16) und Haltesteg (16) eingebracht ist, wobei am Haltesteg (16) eine an der Heckscheibe (16) anliegende Distanzstütze (39) vorgesehen ist.

10. Innenverkleidung nach Anspruch 9, **dadurch gekennzeichnet, dass** die Distanzstütze (39) an einem entgegen der Fahrtrichtung (A) hinteren Ende (40) des Haltestegs (36) vorgesehen ist.

11. Innenverkleidung nach Anspruch 1, **dadurch gekennzeichnet, dass** der Verdeckbezug (11) mit einem Befestigungsabschnitt (41) mit der Heckscheibe (16) verbunden ist, der nach Art eines Umbugs (42) ausgebildet ist.

12. Innenverkleidung nach Anspruch 11, **dadurch gekennzeichnet, dass** der Befestigungsabschnitt (41) des Verdeckbezugs (11) das Haltesystem (21) mit Tragleiste (22) und Befestigungsleiste (23) im Wesentlichen vollständig gegenüber einer Außenseite (As) des Personenkraftwagens (1) abdeckt.

13. Innenverkleidung nach einem oder mehreren der vorangehenden Ansprüche, **dadurch gekennzeichnet, dass** -entgegen der Fahrtrichtung (A) betrachtet- die Länge (LI) des Befestigungsabschnitts (41) größer ist als die Länge (LII) des Haltestegs (36) der Tragleiste (22).
